# EUROPEAN PATENT SPECIFICATION

(11) **EP 4 075 636 B1**
(45) Date of publication and mention of the grant of the patent: **27.08.2025**
(21) Application number: 21884715.0
(22) Date of filing: 03.09.2021
(51) Int. Cl.: H02J 7/00, H02J 50/10, A44C 9/00

(54) **WEARABLE DEVICE AND WEARABLE SYSTEM**
AM KÖRPER TRAGBARE VORRICHTUNG UND TRAGBARES SYSTEM
DISPOSITIF POUVANT ÊTRE PORTÉ SUR SOI ET SYSTÈME POUVANT ÊTRE PORTÉ SUR SOI

(30) Priority: 31.10.2020 CN 202022485052 U
(43) Date of publication of application: 19.10.2022
(73) Proprietor: Honor Device Co., Ltd., Shenzhen, Guangdong 518040 (CN)
(72) Inventor: ZHOU, Guotong, Shenzhen, Guangdong 518040 (CN); YAN, Bin, Shenzhen, Guangdong 518040 (CN); WANG, Juyou, Shenzhen, Guangdong 518040 (CN); WANG, Yanxin, Shenzhen, Guangdong 518040 (CN); YIN, Bangshi, Shenzhen, Guangdong 518040 (CN)
(74) Representative: Epping - Hermann - Fischer
(86) International application number: PCT/CN2021/116337
(87) International publication number: WO 2022/088984

(56) References cited:
- WO-A1-2017/123212
- CN-A- 108 667 099
- CN-A- 111 049 211
- CN-U- 203 691 071
- US-A1- 2018 062 432

## Description

### TECHNICAL FIELD

The present disclosure relates to the field of wearable technologies, and specifically to a wearable device and a wearable system.

### BACKGROUND

A conventional wearable device is usually charged in a wired manner, which requires a user to carry a charger around. In a case that the charger is not carried, the wearable device may not work properly caused by a dead or low battery.

WO 2017/123212 A1 relates to an apparatus, comprising: a computing device; and a wristband coupled to the computing device, the wristband comprising: a movable carriage movable within the wristband, the movable carriage having a charging coil to wirelessly receive power from a charging device when the movable carriage is within a threshold distance from the charging device; and a connector device to send the power to the computing device.

### SUMMARY

The present disclosure provides a wearable device and a wearable system. The wearable device can be charged without using a charger, which improves convenience of use of the wearable device. The invention is set out in the appended claims.

According to a first aspect, the present disclosure provides a wearable system, including a wearable device and an electronic device. The wearable device includes an annular-shaped wearing member and a first coil. The annular-shaped wearing member includes an outer annular surface, the first coil is accommodated inside the annular-shaped wearing member, and a laying surface of the first coil is arranged along a circumferential direction of the annular-shaped wearing member. The electronic device includes a second coil.

In a case that the outer annular surface partially abuts against the electronic device, the first coil and the second coil are disposed opposite to each other, and the first coil and the second coil that are in an energized state generate magnetic field lines in a same direction.

When a user is wearing the wearable device, the user does not need to remove the wearable device, but instead, may directly allow the outer annular surface of the annular-shaped wearing member to partially abut against the electronic device, so that the first coil is disposed opposite to the second coil. The second coil in the energized state generates an alternating magnetic field, and the first coil senses the alternating magnetic field of the second coil, to generate an induced current. This realizes the charging of the wearable device, thereby improving the convenience of use of the wearable device.

The annular-shaped wearing member refers to that the wearing member is in the annular shape when the wearable device is worn on a user's body. In other words, the wearing member may be in the annular shape, or may be spread in a plate shape, when the wearable device is not worn on a user's body.

The laying surface of the first coil refers to a mounting surface of the first coil.

In an embodiment, a normal to the laying surface through a winding center of the first coil passes through the outer annular surface, so that the first coil can sense the magnetic field lines passing through the laying surface of the first coil. When the wearable device is worn on a user's body, it can be charged without being removed, which enhances a battery life of the wearable device, thereby improving the convenience of use of the wearable device.

In an embodiment, the electronic device includes a rear cover. The second coil is mounted to an inner side of the rear cover. A normal to a laying surface of the second coil through a winding center of the second coil is perpendicular to the rear cover, to radiate magnetic field lines outward passing through the rear cover.

In an embodiment, in a case that the outer annular surface partially abuts against the electronic device, the first coil is disposed opposite to the second coil, and the normal through the winding center of the first coil is parallel or coincident with the normal through the winding center of the second coil, so that electromagnetic induction can be generated between the first coil and the second coil.

According to a second aspect, the present disclosure provides a wearable device, including an annular-shaped wearing member and a first coil. The first coil is accommodated inside the annular-shaped wearing member. A laying surface of the first coil is arranged along a circumferential direction of the annular-shaped wearing member. The first coil is configured to sense magnetic field lines passing through the laying surface of the first coil, to generate an induced current. The wearable device can be charged without a charger, which improves the convenience of use of the wearable device.

In an embodiment, the annular-shaped wearing member includes an outer annular surface. A normal to the laying surface through a winding center of the first coil passes through the outer annular surface, so that the first coil can sense the magnetic field lines passing through the laying surface of the first coil.

When a user is wearing the wearable device, the user does not need to remove the wearable device, but instead, may directly allow the outer annular surface of the annular-shaped wearing member to partially abut against the electronic device, so that the first coil is disposed opposite to a power supply coil of an external power supply device. The first coil can sense the magnetic field lines passing through the laying surface of the first coil, so as to realize the charging of the wearable device, thereby improving the convenience of use of the wearable device.

In an embodiment, the wearable device further includes a power supply and a magnetic isolation sheet. The power supply and the magnetic isolation sheet are accommodated inside the annular-shaped wearing member. The power supply is electrically connected to the first coil, and is located at an inner side of the magnetic isolation sheet. The first coil is located at an outer side of the magnetic isolation sheet.

A conventional power supply generally has a metal case. Therefore, in response to receiving an electromagnetic wave generated by the first coil, the metal case of the power supply generates an eddy current, and thereby generating an electromagnetic wave in the opposite direction to the electromagnetic wave of the first coil. As a result, the electromagnetic wave of the first coil is weakened, which causes reduction in the induced current of the first coil, thereby impairing the charging effect.

The magnetic isolation sheet can isolate the first coil from the metal case, to isolate attenuation and interference of the metal case of the power supply to the magnetic field of the first coil, which prevents energy waste, thereby improving the charging efficiency of the first coil.

In an embodiment, the laying surface of the first coil is an outer surface of the magnetic isolation sheet, that is, the isolation sheet supports and fixes the first coil. The first coil is formed by winding a wire along an edge of the outer surface of the magnetic isolation sheet, to form a relatively large coil inside the annular-shaped wearing member, which is advantageous for forming a relatively large magnetic induction loop. As such, a relatively larger number of magnetic field lines pass through the first coil, to generate a relatively large magnetic flux, and thereby generating a relatively large induced current. This helps to enhance the charging efficiency of the wearable device.

In an embodiment, the wearable device further includes an auxiliary circuit board. The auxiliary circuit board is electrically connected to the first coil. The magnetic isolation sheet is mounted to an inner surface of the auxiliary circuit board. The laying surface of the first coil is an outer surface of the auxiliary circuit board. That is, the auxiliary circuit board supports and fixes the first coil. The auxiliary circuit board the first coil is formed by winding a wire along an edge of the outer surface of the auxiliary circuit board, to form a relatively large coil inside the annular-shaped wearing member, which is advantageous for forming a relatively large magnetic induction loop. As such, a relatively larger number of magnetic field lines pass through the first coil, to generate a relatively large induced current. This helps to enhance the charging efficiency of the wearable device.

In an embodiment, a projection of the first coil on the inner surface of the auxiliary circuit board is at least partially located within a projection of the magnetic isolation sheet on the inner surface of the auxiliary circuit board. That is, the projection of the magnetic isolation sheet on the inner surface of the auxiliary circuit board at least partially covers the projection of the first coil on the inner surface of the auxiliary circuit board, to ensure that the isolation sheet can isolate the first coil from the metal case of the power supply.

In an embodiment, the annular-shaped wearing member includes a charging portion. The charging portion is made of a non-metallic material. The first coil is configured to sense the magnetic field lines via the charging portion.

It should be understood that, the first coil transfers energy by using the principle of alternating electromagnetic field induction. Therefore, the charging portion made of the non-metallic material effectively ensures that the first coil can sense the magnetic field lines, thereby realizing the charging of the wearable device.

In an embodiment, the outer annular surface is provided with a wearing identification, to identify a wearing position of the annular-shaped wearing member 10. A projection of the first coil on the outer annular surface covers the wearing identification, or, a projection of the first coil on the outer annular surface is disposed opposite to the wearing identification. That is, a position of the first coil can be determined according to the wearing identification. A user can freely choose a placing position of the first coil when wearing the wearable device, to facilitate the charging of the wearable device with the first coil.

In an embodiment, the annular-shaped wearing member includes a first housing and a second housing fixedly connected to each other. The first housing and the second housing are enclosed to form an accommodation cavity. The accommodation cavity is configured to accommodate the first coil.

In an embodiment, the wearable device further includes a circuit board and a functional component. The circuit board is electrically connected to the first coil. The functional component is mounted to the circuit board, and is electrically connected to the circuit board, to realize functional diversity of the wearable device.

The circuit board is electrically connected to the power supply, and the first coil is electrically connected to the power supply via the circuit board.

In an embodiment, the functional component is mounted to an inner surface of the circuit board. The circuit board can buffer an external force received by the functional component when the wearable device is worn on a user's body. That is, the circuit board can protect the functional component.

The wearable device is a ring.

It should be noted that, a ring has a relatively small size, which only allows a small space inside the annular-shaped wearing member for placing the power supply, therefore the power supply has a small capacity. When using the wearable device, a user needs to charge the power supply several times a day, which causes an inconvenience to the user. The wearable device according to the embodiments of the present disclosure can be charged without being removed, which overcomes this inconvenience, thereby improving user experience of the wearable device.

### BRIEF DESCRIPTION OF DRAWINGS

To describe the technical solutions in the embodiments of the present disclosure or the conventional technology more clearly, the following briefly describes the accompanying drawings required for describing the embodiments or the conventional technology.
FIG. 1 is a schematic structural diagram of a wearable system according to an embodiment of the present disclosure.
FIG. 2 is a schematic diagram of a module structure of a wearable device in the wearable system shown in FIG. 1.
FIG. 3 is a partially exploded view of a wearable device in the wearable system shown in FIG. 1.
FIG. 4 is a schematic cross-sectional view of a wearable device in the wearable system shown in FIG. 1 sectioned along an I-I direction.
FIG. 5 is a schematic structural diagram of a wearable device in the wearable system shown in FIG. 1 according to an embodiment.
FIG. 6 is a schematic structural diagram of a wearable device in the wearable system shown in FIG. 1 according to another embodiment.
FIG. 7 is a schematic structural diagram of the wearable system shown in FIG. 1 in another state.
FIG. 8 is a schematic cross-sectional view of the wearable system shown in FIG. 7 sectioned along an II-II direction.

### DESCRIPTION OF EMBODIMENTS

The technical solutions in the embodiments of the present disclosure are described below with more details with reference to the accompanying drawings.

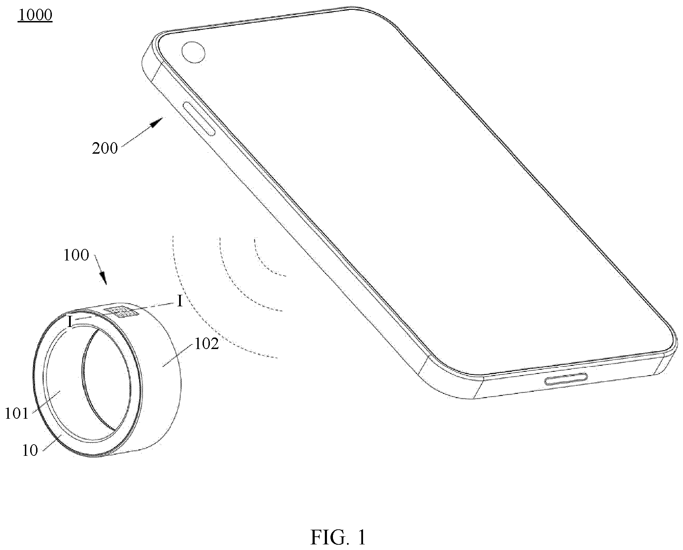

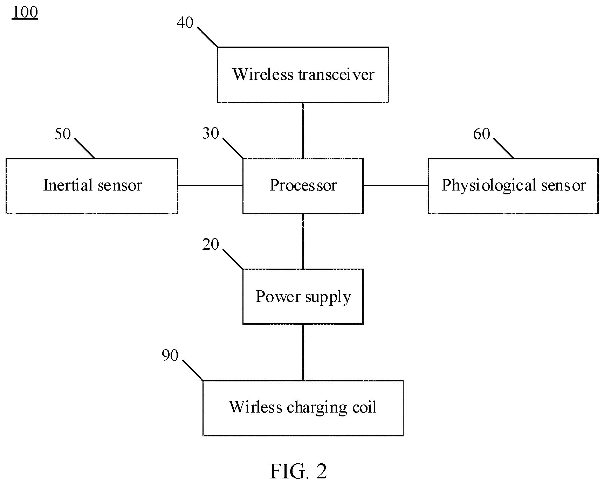

FIG. 1 is a schematic structural diagram of a wearable system 1000 according to an embodiment of the present disclosure. FIG. 2 is a schematic diagram of a module structure of a wearable device 100 in the wearable system 1000 shown in FIG. 1.

The wearable system 1000 includes the wearable device 100 and an electronic device 200. The wearable device 100 is in a communicative connection with the electronic device 200. In this embodiment, the wearable device 100 establishes the communicative connection with the electronic device 200 in a wireless manner. In some other embodiments, the wearable device 100 establishes the communicative connection with the electronic device 200 in a wired manner.

The wearable device 100 is a ring. In other examples, the wearable device may be a wearable electronic product, such as a watch, a smart watch, a wristband, a smart wristband, a pair of augmented reality (augmented reality, AR) glasses, an AR helmet, a pair of virtual reality (virtual reality, VR) glasses, a VR helmet, an electronic health testing device, a belt, a waist belt, a bracelet, an anklet, a necklace, and so on, or an ornament.

In this embodiment, the wearable device 100 is a smart ring, which can realize various functions by various embedded functional components. The wearable device 100 may include an annular-shaped wearing member 10, a power supply 20, a processor 30, a wireless transceiver 40, an inertial sensor 50, and a physiological sensor 60. The annular-shaped wearing member 10 is a finger ring, and is in an annular shape. The annular-shaped wearing member 10 includes an inner annular surface 101 and an outer annular surface 102 that are disposed opposite to each other. When a user is wearing the wearable device 100, the inner annular surface 101 of the annular-shaped wearing member 10 provides a good fit to the skin of the users' finger, and the outer annular surface 102, as an exterior appearance of the wearable device 100, is exposed relative to the user's finger. The annular-shaped wearing member 10 being in the annular shape refers to that the annular-shaped wearing member 10 is in the annular shape when the wearable device 100 is worn on the user's body. In other words, the annular-shaped wearing member 10 may be in the annular shape, or may be spread in a plate shape, when the wearable device 100 is not worn on the user's body. It should be understood that, the annular-shaped wearing member 10 is not limited to the circular annular shape as shown in FIG. 1, and alternatively, the annular-shaped wearing member 10 may be in a rectangular annular shape or any other special-shaped annular shape.

It should be noted that, orientation terms such as "inside" and "outside" for describing the wearable device 100 in the embodiments of the present disclosure are merely used with reference to a state where the wearable device 100 is worn on the user's finger. The term "inside" means a side close to the user's finger, and the term "outside" means a side away from the user's finger. These terms do not indicate or imply that an apparatus or element referred to need to have a specific orientation, be constructed and operated in a specific orientation, and therefore should not be construed as a limitation of the present disclosure.

The power supply 20, the processor 30, the wireless transceiver 40, the inertial sensor 50, and the physiological sensor 60 are all accommodated inside the annular-shaped wearing member 10. That is, the power supply 20, the processor 30, the wireless transceiver 40, the inertial sensor 50, and the physiological sensor 60 are all located between the inner annular surface 101 and the outer annular surface 102 of the annular-shaped wearing member 10, to maintain the integrity of the appearance of the wearable device 100, thereby improving the beauty of the appearance of the wearable device 100. The power supply 20 is electrically connected with the processor 30, the wireless transceiver 40, the inertial sensor 50, and the physiological sensor 60, and is configured to provide power supply to the processor 30, the wireless transceiver 40, the inertial sensor 50, and the physiological sensor 60. The power supply 20 may be a lithium battery or any other energy storage component.

The wireless transceiver 40 is electrically connected to the processor 30, and is configured to receive a signal sent by the electronic device 200, and/or, send a signal to the electronic device 200. That is, the wearable device 100 establishes the communicative connection with the electronic device 200 via the wireless transceiver 40. The wireless transceiver 40 is a Bluetooth module, a WIFI module, or any other wireless communication module which can communicate with the electronic device 200. It should be understood that, the electronic device 200 may be an electronic product, such as a smartphone, a tablet computer, a personal digital assistant (personal digital assistant, PDA), a mobile internet device (mobile internet device, MID), a smart wearable device, and so on. In this embodiment of the present disclosure, as an example, the electronic device 200 is a mobile phone.

It should be noted that, the term "and/or" in the embodiments of the present disclosure is merely association relationships for describing associated objects, which indicates that there may exist three types of relationships. For example, A and/or B may indicate: A exists alone, A and B exist at the same time, and B exists alone. The "and/or" in the following description may have the same meaning.

The inertial sensor 50 is electrically connected to the processor 30, and is configured to detect an action of a finger (such as bending or shaking the finger) wearing the wearable device 100, convert a detected finger action into a finger motion signal, and send a detected finger motion signal to the processor 30. The inertial sensor 50 may include a three-axis acceleration sensor, and/or a three-axis angular velocity sensor, and/or a three-axis magnetic sensor, or any other type of inertial sensor 50 which can detect the action of the finger wearing the wearable device 100. The three-axis acceleration sensor is configured to detect a change in a finger motion state; the three-axis angular velocity sensor is configured to detect a change in a finger motion gesture; and the three-axis magnetic sensor is configured to detect a finger pointing direction and its change. According to the changes in the finger motion state and the finger motion gesture, the finger action can be recognized, and content written with the finger can also be recognized. It should be understood that, according to the finger pointing direction when the finger is making an action, an electronic device to be controlled by the finger can be distinguished and controlled, in a case that the wearable device 100 is connected to a plurality of electronic devices at the same time.

The processor 30 is configured to receive the finger motion signal sent by the inertial sensor 50, recognize the finger action according to the finger motion signal, generate a corresponding control instruction according to a recognized finger action, and send the control instruction to the electronic device 200 via the wireless transceiver 40, in order to control the electronic device 200 to process business. For example, the electronic device 200 is controlled to turn on or off; alternatively, the electronic device 200 is controlled to perform audio services such as media and calls; alternatively, the electronic device 200 is controlled to process some other data services. The audio services may include media services, such as playing music, recordings, sounds in video files, background music in games, and incoming call prompts for users.

The physiological sensor 60 may be exposed relative to the outer annular surface 102 of the annular-shaped wearing member 10, and is electrically connected to the processor 30. The physiological sensor 60 is configured to monitor physiological indicator information of a wearer of the wearable device 100, such as a heart rate, a pulse, a blood pressure, a blood oxygen, and so on, and send it to the electronic device 200 via the wireless transceiver 40. An application program of the electronic device 200 may store the relevant physiological indicator information in a cloud through a network, which is convenient for users to access data via different networked smart terminals.

It should be understood that, the wireless transceiver 40, the inertial sensor 50, and the physiological sensor 60 are all functional components of the wearable device 100. In some other embodiments, the wearable device 100 may include other functional components, such as a display screen or a near field communication (near field communication, NFC) chip. In this case, the display screen is electrically connected to the processor 30, and is configured to display information, such as displaying a date, a time, or a weather, and/or, the physiological indicator information such as the wearer's heart rate, pulse, blood pressure, and blood oxygen, to facilitate users to observe or query information. The NFC chip is electrically connected to the processor 30, for realizing a payment function of the wearable device 100. For example, the NFC chip may virtualize a transportation card or a bank card of a wearer, so that when the wearer takes public transport to office or goes shopping, transaction settlement can be made by using the NFC chip and an external NFC terminal. There is no need for the wearer to carry the transportation card or the bank card, thereby improving the wearer's experience.

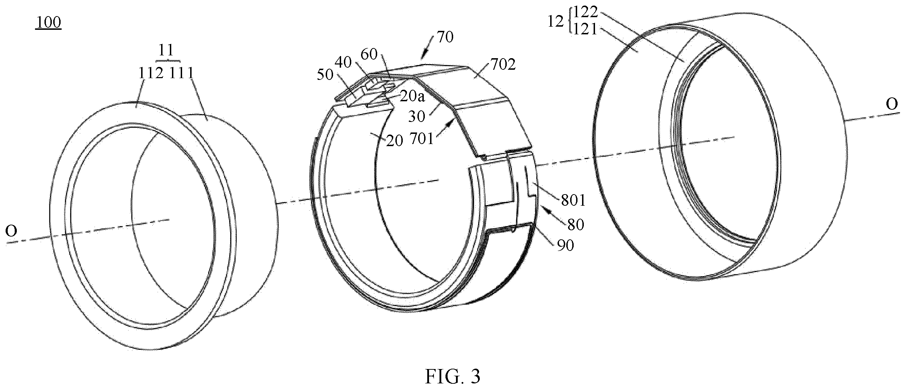

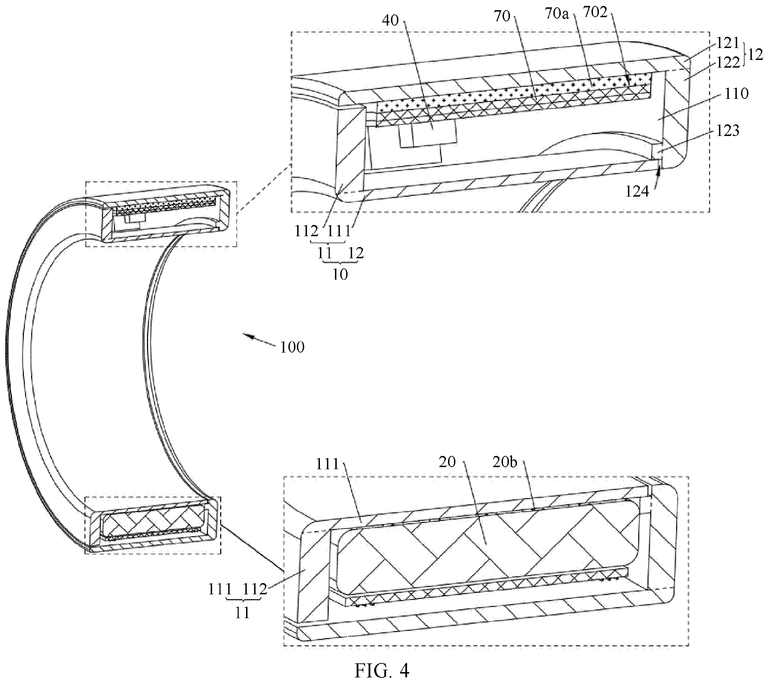

FIG. 3 is a partially exploded view of the wearable device 100 in the wearable system 1000 shown in FIG. 1. FIG. 4 is a schematic cross-sectional view of the wearable device 100 in the wearable system shown in FIG. 1 sectioned along an I-I direction. Being "sectioned along an I-I direction" refers to being sectioned along a plane where the I-I line is located, and the following related description may have the same meaning.

The annular-shaped wearing member 10 has a central axis O-O. The central axis O-O of the annular-shaped wearing member 10 refers to that the annular-shaped wearing member 10 is symmetric with respect to the central axis O-O. Specifically, the annular-shaped wearing member 10 includes a first housing 11 and a second housing 12. The first housing 11 and the second housing 12 are fixedly connected to each other, and enclose to form an accommodation cavity 110. The accommodation cavity 110 is configured to accommodate the power supply 20, the processor 30, the wireless transceiver 40, the inertial sensor 50, and the physiological sensor 60. Exemplarily, the first housing 11 and the second housing 12 may be fixedly connected to each other by means of adhesion.

The first housing 11 includes a main body portion 111 and a fixing portion 112 that are fixedly connected to each other. The main body portion 111 and the fixing portion 112 are both in a circular annular shape. Specifically, the fixing portion 112 is fixedly connected to an end of the main body portion 111, and extends from an inner surface in a direction toward an outer surface of the main body portion 111. The inner surface of the main body portion 111 is the inner annular surface 101 of the annular-shaped wearing member 10. Exemplarily, the first housing 11 is a structural component that is integrally formed by the main body portion 111 and the fixing portion 112.

The second housing 12 includes a main body portion 121 and a fixing portion 122 fixedly connected to each other. The main body portion 121 and the fixing portion 122 are both in a circular annular shape. Specifically, the main body portion 121 of the second housing 12 and the main body portion 111 of the first housing 11 are disposed in parallel and spaced apart. An end of the main body portion 121 of the second housing 12 is fixedly connected to the fixing portion 112 of the first housing 11. The fixing portion 122 of the second housing 12 is fixedly connected to the other end of the main body portion 121, and is disposed in parallel and spaced apart with the fixing portion 112 of the first housing 11. In this case, the fixing portion 122 of the second housing 12 extends from an inner surface of the main body portion 121 in a direction facing away from an outer surface. The outer surface of the main body portion 121 of the second housing 12 is the outer annular surface 102 of the annular-shaped wearing member 10. Exemplarily, the second housing 12 is a structural component that is integrally formed by the main body portion 121 and the fixing portion 122.

In addition, a surface of the fixing portion 122 of the second housing 12 facing the fixing portion 112 of the first housing 11 partially protrudes, to form an extension portion 123. Specifically, the extension portion 123 is located at one end of the fixing portion 122 of the second housing 12 away from the main body portion 121. The extension portion 123 is provided with a fixing groove 124, and an opening of the fixing groove 124 is located on a surface of the extension portion 123 facing away from the fixing portion 121. In this case, an end of the main body portion 111 of the first housing 11 facing away from the fixing portion 112 is fixedly connected to a groove wall of the fixing groove 124.

The wearable device 100 also includes a circuit board 70, a magnetic isolation sheet 80, and a first coil 90. The circuit board 70, the magnetic isolation sheet 80, and the first coil 90 are all accommodated inside the annular-shaped wearing member 10. That is, the circuit board 70, the magnetic isolation sheet 80, and the first coil 90 are all accommodated in the accommodation cavity 110. The circuit board 70 carries the processor 30, the wireless transceiver 40, the inertial sensor 50, and the physiological sensor 60. That is, the processor 30, the wireless transceiver 40, the inertial sensor 50, and the physiological sensor 60 may all be integrated on the circuit board 70.

The circuit board 70 includes an inner surface 701 and an outer surface 702 that are disposed opposite to each other. The processor 30, the wireless transceiver 40, the inertial sensor 50, and the physiological sensor 60 are all mounted on the inner surface 701 of the circuit board 70. During the use of the wearable device 100, the circuit board 70 can buffer an external force received by the processor 30, the wireless transceiver 40, the inertial sensor 50, and the physiological sensor 60. That is, the circuit board 70 can protect the processor 30, the wireless transceiver 40, the inertial sensor 50, and the physiological sensor 60, to prevent them from being damaged due to the external force, thereby prolonging a service life of the wearable device 100.

In addition, the circuit board 70 is a polyline-shaped board body, and is adapted to the shape of the annular-shaped wearing member 10. Exemplarily, the circuit board 70 is a rigid-flex board. This ensure that it not only has a certain flexibility enabling itself to be bent into the polyline shape, thereby being adapted to the shape of the annular-shaped wearing member 10, but also has a certain rigidity enabling to support the functional components, such as the processor 30, the wireless transceiver 40, the inertial sensor 50, and the physiological sensor 60. In some other embodiments, the circuit board 70 may be an arc-shaped board body or any other special-shaped board body.

In this embodiment, the circuit board 70 is fixedly connected to the inner surface of the main body portion 121 of the second housing 12. Exemplarily, the circuit board 70 may be fixedly connected to the inner surface of the second housing 12 by means of adhesion. In this case, the wearable device 100 may further include an adhesive layer 70a. The adhesive layer 70a is connected between the outer surface 702 of the circuit board 70 and the inner surface of the main body portion 122 of the second housing 12.

In some other embodiments, the processor 30, the wireless transceiver 40, the inertial sensor 50, and the physiological sensor 60 may be mounted on the outer surface 702 of the circuit board 70. In this case, the circuit board 70 may be fixed to the outer surface of the main body portion 111 of the first housing 11. The adhesive layer 70a is connected between the inner surface 701 of the circuit board 70 and the outer surface of the main body portion 111 of the first housing 11.

In this embodiment, the magnetic isolation sheet 80 is an arc-shaped plate body, and is adapted to the shape of the annular-shaped wearing member 10. Specifically, the magnetic isolation sheet 80 is fixedly connected to the circuit board 70, and is enclosed with the circuit board 70 to be an approximately circular annular-shaped plate body. In this case, the circular annular-shaped plate body is adapted to the shape of the annular-shaped wearing member 10. The magnetic isolation sheet 80 includes an outer surface 801. The outer surface 801 of the magnetic isolation sheet 80 is arranged along a circumferential direction of the annular-shaped wearing member 10. That is, the outer surface 801 of the magnetic isolation sheet 80 is disposed around the central axis O-O of the annular-shaped wearing member 10. Exemplarily, the outer surface 801 of the magnetic isolation sheet 80 is a circular arc surface, and a central axis of the outer surface 801 of the magnetic isolation sheet 80 is coincident with the central axis O-O of the annular-shaped wearing member 10.

The power supply 20 is located at an inner side of the magnetic isolation sheet 80, and is electrically connected to the circuit board 70. As such, the power supply 20 is electrically connected to the processor 30, the wireless transceiver 40, the inertial sensor 50, and the physiological sensor 60 via the circuit board 70, to power the processor 30, the wireless transceiver 40, the inertial sensor 50, and the physiological sensor 60. Exemplarily, the power supply 20 may be electrically connected to the circuit board 70 via a connecting circuit board 20a. In this embodiment, the power supply 20 is in a shape of an arc-shaped plate, and is adapted to the shape of the magnetic isolation sheet 80. During the use of the wearable device 100, the magnetic isolation sheet 80 can buffer an external force received by the power supply 20. That is, the magnetic isolation sheet 80 can protect the power supply 20, to prevent the power supply 20 from being damaged due to the external force, thereby prolonging the service life of the wearable device 100.

The power supply 20 is fixedly connected to the outer surface of the main body portion 111 of the first housing 11. Exemplarily, the power supply 20 may be fixedly connected to the outer surface of the main body portion 111 of the first housing 11 by means of adhesion. In this case, the wearable device 100 may further include an adhesive layer 20b. The adhesive layer 20b is connected between the inner surface of the power supply 20 and the outer surface of the main body portion 111 of the first housing 11.

It should be understood that, most functional components of the wearable device 100 are carried on the circuit board 70, that is, most functional components are located on the same side of the wearable device 100 as the circuit board 70. Therefore, the power supply 20 and the magnetic isolation sheet 80 are located on the other side of the wearable device 100, which can ensure overall gravitational balance of the wearable device 100, thereby improving user comfort when wearing the wearable device 100.

The first coil 90 is located at an outer side of the magnetic isolation sheet 80, and is electrically connected to the power supply 20. In this embodiment, the first coil 90 has a forward charging mode. In the forward charging mode, the first coil 90 is configured to sense the magnetic field lines passing through a laying surface of the first coil 90, to generate an induced current. The power supply 20 is configured to receive the induced current of the first coil 90, so as to achieve charging. The laying surface of the first coil 90 is arranged along a circumferential direction of the annular-shaped wearing member 10. That is, the laying surface of the first coil 90 is disposed around the central axis O-O of the wearable device 10. It should be understood that, the laying surface of the first coil 90 refers to a mounting surface of the first coil 90. In some other embodiments, the first coil 90 may have a reverse charging mode. In the reverse charging mode, under the action of an alternating current provided by the power supply 20, the first coil 90 generates an alternating magnetic field, namely radiating alternating magnetic field lines outward, to charge an external device.

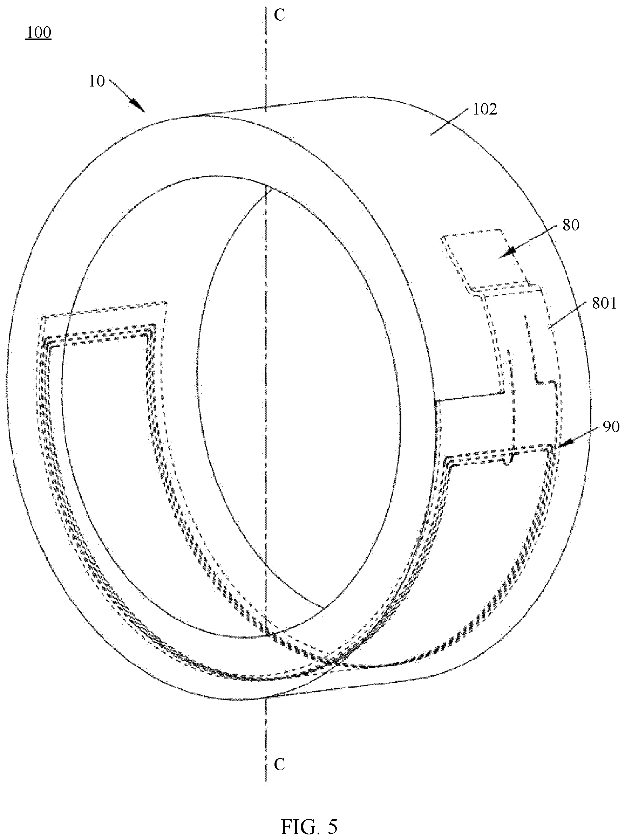

FIG. 5 is a schematic structural diagram of the wearable device 100 in the wearable system 1000 shown in FIG. 1 according to an embodiment.

In this embodiment, the outer surface 801 of the magnetic isolation sheet 80 is the laying surface of the first coil 90. Specifically, the first coil 90 is mounted to the outer surface 801 of the magnetic isolation sheet 80, and is electrically connected to the circuit board 70, so as to be electrically connected to the power supply 20 via the circuit board 70. In other words, the first coil 90 is located at the outer side of the magnetic isolation sheet 80, to facilitate electromagnetic induction with an external wireless power supply device. The first coil 90 receives an energy of the power supply device and output the energy, to allow the power supply 20 to receive and store the energy outputted by the first coil 90, namely realizing charging the power supply 20, thereby enhancing a battery life of the wearable device 100. In this case, the first coil 90 and the magnetic isolation sheet 80 form a wireless charging module of the wearable device 100. The wireless charging module may be fixedly connected to an outer surface of the power supply 20 or the inner surface of the main body portion 121 (as shown in FIG. 4) of the second housing 12. Exemplarily, the wireless charging module may be fixedly connected to the outer surface of the power supply 20 or the inner surface of the main body portion 121 of the second housing 12 by means of adhesion. In addition, the circuit board 70 may be provided with a power supply management module. The power supply management module is connected between the power supply 20 and the first coil 90, to realize the electrical connection between the first coil 90 and the power supply 20. Exemplarily, the power supply management module may include a charging circuit, a voltage drop regulation circuit, a protection circuit, and an electrical measurement circuit. The charging circuit is electrically connected to the first coil 90, to receive an electrical signal inputted from an external power supply apparatus via the first coil 90. The voltage drop regulation circuit is electrically connected to the charging circuit and the power supply 20, so that the electrical signal inputted by the charging circuit may be undergone voltage transformation and then outputted to the power supply 20, to complete the charging of the power supply 20; in addition, an electrical signal outputted by the power supply 20 may be undergone voltage transformation and then outputted to the other functional components of the wearable device 100, to provide power supply to the other functional components of the wearable device 100. The protection circuit may be configured to prevent the power supply 20 from overcharge, over-discharge, short circuit, or over-current. In addition, the battery management module may be configured to monitor a capacity of the power supply 20, the number of cycles of the power supply 20, a health status of the power supply 20 (leakage, impedance) and other parameters. In some other embodiments, the wearable device 100 may include a charging interface. The charging interface is electrically connected to the power supply 20 via the circuit board 70, to realize the charging of the power supply 20.

It should be noted that, a conventional power supply generally has a metal case. Therefore, the magnetic isolation sheet 80 can not only support and pre-fix the first coil 90, but also isolate the first coil 90 from the metal case of the power supply 20, to prevent the metal case of the power supply 20 from generating an eddy current in response to receiving an electromagnetic signal generated by the first coil 90, and thereby generating an electromagnetic signal in an opposite direction to an electromagnetic wave of the first coil 90. The electromagnetic signal generated by the metal case of the power supply 20 will weaken the electromagnetic wave of the first coil 90, which results in reduction of the induced current of the first coil 90, thereby impairing the charging effect. Therefore, the magnetic isolation sheet 80 can reduce attenuation and interference of the metal case of the power supply 20 to the magnetic field of the first coil 90, which plays a role of isolating metal. This can reduce energy waste, thereby improving the charging efficiency of the first coil 90.

In this embodiment, a normal to the laying surface through a winding center C-C of the first coil 90 passes through the outer annular surface 102 of the annular-shaped wearing member 10. Specifically, the first coil 90 is formed by winding a wire along an edge of the outer surface 801 of the magnetic isolation sheet 80. The winding center C-C of the first coil 90 refers to a center around which the wire is wound. That is, the wire is wound around the winding center C-C in one or more layers to form the first coil 90.

Exemplarily, the first coil 90 has three layers, which is formed by winding an end of a wire on the outer surface 801 of the magnetic isolation sheet 80. The first coil 90 is formed by winding the end of the wire along an edge of the outer surface 801 of the magnetic isolation sheet 80, to form a relatively large coil inside the annular-shaped wearing member 10, which is advantageous for forming a relatively large magnetic induction loop. As such, a relatively larger number of magnetic field lines pass through the first coil 90, to generate a relatively large induced current. This helps to enhance the charging efficiency of the power supply 20. In some other embodiments, the first coil 90 may have one layer, two layers, three layers, four layers, or more than six layers. That is, the first coil 90 may have one layer or more layers.

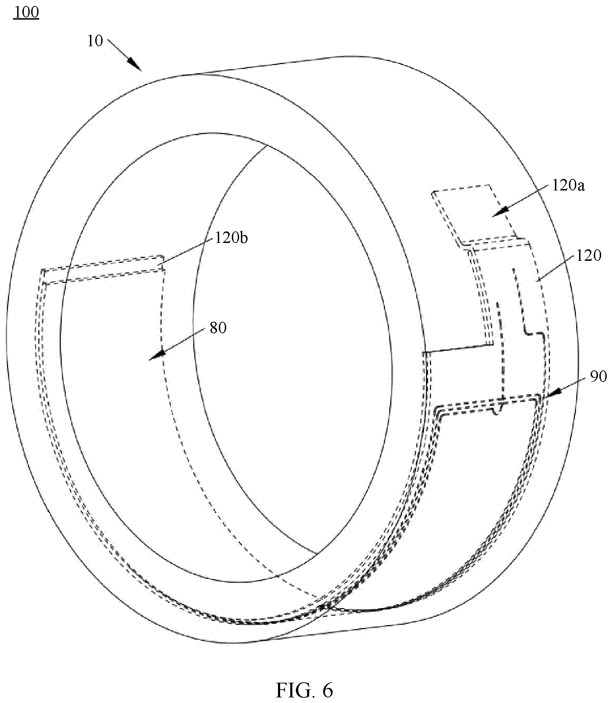

FIG. 6 is a schematic structural diagram of the wearable device 100 in the wearable system 100 shown in FIG. 1 according to another embodiment.

In this embodiment, the wearable device 100 further includes an auxiliary circuit board 120. The auxiliary circuit board 120 is electrically connected to the power supply 20 (as shown in FIG. 3). Specifically, the auxiliary circuit board 120 is electrically connected to the circuit board 70 (as shown in FIG. 3), so as to be electrically connected to the power supply 20 via the circuit board 70. The auxiliary circuit board 120 is in a shape of an arc-shaped plate. The auxiliary circuit board 120 includes an outer surface 120a and an inner surface 120b that are disposed opposite to each other. The outer surface 120a of the auxiliary circuit board 120 is arranged along a circumferential direction away from the annular-shaped wearing member 10. That is, the outer surface 120a of the auxiliary circuit board 120 is disposed around the central axis O-O (as shown in FIG. 3) of the annular-shaped wearing member 10. Exemplarily, the outer surface 120a of the auxiliary circuit board 120 is a circular arc surface, and a central axis of the outer surface 120a of the auxiliary circuit board 120 is coincident with the central axis O-O of the wearing member 10.

Specifically, the magnetic isolation sheet 80 is mounted to the inner surface 120b of the auxiliary circuit board 120. The first coil 90 is mounted to the outer surface 120a of the auxiliary circuit board 120, and is electrically connected to the auxiliary circuit board 120, so as to be electrically connected to the power supply 20 via the auxiliary circuit board 120 and the circuit board 70. The laying surface of the first coil 90 is the outer surface 120a of the auxiliary circuit board 120. The first coil 90 is formed by winding a wire along an edge of the outer surface 120a of the auxiliary circuit board 120a. In this case, the isolation sheet 80, the first coil 90, and the auxiliary circuit board form a wireless charging module of the wearable device 100.

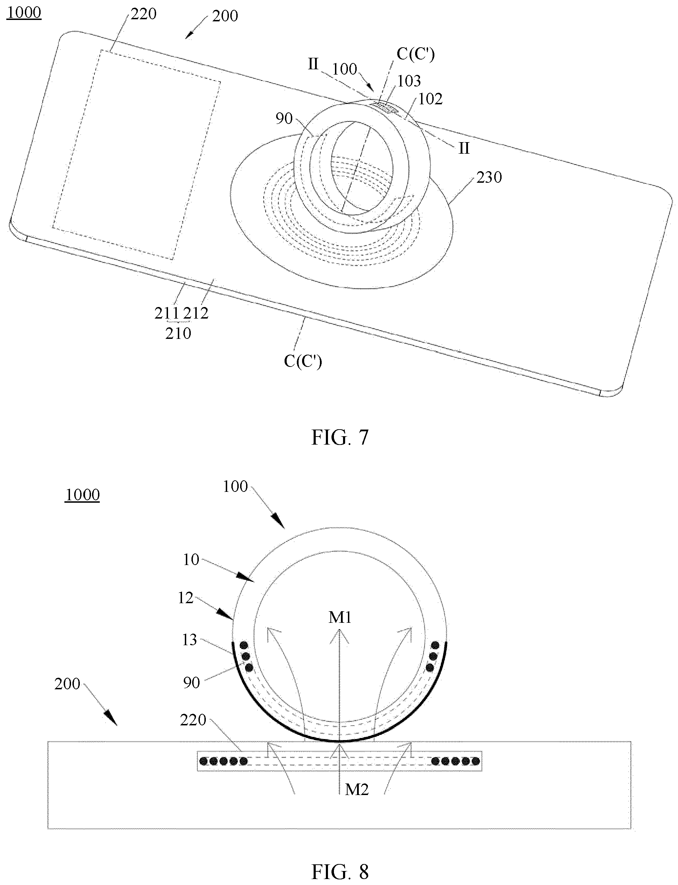

In addition, a projection of the isolation sheet 80 on the inner surface 120b of the auxiliary circuit board 120 covers a projection of the first coil 90 on the inner surface 120b of the auxiliary circuit board 120. That is, the projection of the first coil 90 on the inner surface 120b of the auxiliary circuit board 120 is located within the projection of the isolation sheet 80 on the inner surface 120b of the auxiliary circuit board 120. As such, the attenuation and interference to the magnetic field of the first coil 90 caused by the metal case of the power supply 20 can be reduced, which plays a role of isolating metal. This reduces energy waste, thereby improving the charging efficiency. In some other embodiments, the projection of the first coil 90 on the inner surface 120b of the auxiliary circuit board 120 may be partially located within the projection of the isolation sheet 80 on the inner surface 120b of the auxiliary circuit board 120. That is, the projection of the first coil 90 on the inner surface 120b of the auxiliary circuit board 120 is at least partially located within the projection of the isolation sheet 80 on the inner surface 120b of the auxiliary circuit board 120. FIG. 7 is a schematic structural diagram of the wearable system 1000 shown in FIG. 1 in another state. FIG. 8 is a schematic cross-sectional view of the wearable system 1000 shown in FIG. 7 sectioned along an II-II direction. In the state shown in FIG. 7, a user is wearing the wearable device 100 and holding the electronic device 200.

The electronic device 200 includes a housing 210, a power supply 220, and a second coil 230. The power supply 220 and the second coil 230 are both mounted inside the housing 210. The housing 210 includes a middle frame 211 and a rear cover 212. The middle frame 211 is fixedly connected to the rear cover 212. In this case, the power supply 220 and the second coil 239 are both mounted at a side of the rear cover 212 close to the middle frame 211. That is, the power supply 220 and the second coil 230 are both mounted at an inner side of the rear cover 212.

The second coil 230 is electrically connected to the power supply 220. Specifically, the second coil 230 is located at a middle of the electronic device 200. A normal to a laying surface of the second coil 230 through a winding center C'-C' of the second coil 230 is perpendicular to the rear cover 212. The second coil 230 has a reverse charging mode. In the reverse charging mode, the second coil 230 is connected to the power supply 220. Under the action of an alternating current provided by the power supply 220, an alternating current passes through the second coil 230, and the second coil 230 generates an alternating magnetic field, namely radiating alternating magnetic field lines outward. In some other embodiments, the second coil 230 may have a forward charging mode. In the forward charging mode, electromagnetic induction occurring between the second coil 230 and an external wireless power supply device charges the power supply 220, so as to enhance a battery life of the electronic device 200.

As shown in FIG. 7 and FIG. 8, the outer annular surface 102 of the annular-shaped wearing member 10 partially abuts against the electronic device. The first coil 90 of the wearable device 100 and the second coil 230 of the electronic device 200 are disposed opposite to each other, and in addition, the two when being energized generate the magnetic field lines in the same direction. The normal through the winding center C-C of the first coil 90 is coincident with the normal through the winding center C'-C' of the second coil 230. In some other embodiments, the normal through the winding center C-C of the first coil 90 may be disposed in parallel with the normal through the winding center C'-C' of the second coil 230.

During the process that the user's hand is wearing the wearable device 100 and holding the electronic device 200, when the outer annular surface 102 of the annular-shaped wearing member 10 partially abuts against the electronic device 200, and the first coil 90 is disposed oppositely with the second coil 230, the second coil 230 of the electronic device 200 may generate the alternating magnetic field under the action of the alternating current provided by the power supply 220. The first coil 90 of the wearable device 100 senses the second coil 230 of the electronic device 200, to couple with the second coil 230 of the electronic device 200, which realizes that the electronic device 200 provides power supply to the wearable device 100 via the second coil 230. In other words, when a user is wearing the wearable device 100, the user does not need to remove the wearable device 100, but instead, directly allow the outer annular surface 102 of the annular-shaped wearing member 10 to partially abut against the electronic device 200, so that the first coil 90 and the second coil 230 are disposed opposite to each other. In this way, the wearable device 100 can be charged while the electronic device 200 is being used, which simplifies the charging manner of the wearable device 100, and enhances the battery life of the wearable device 100, thereby improving user experience.

It should be understood that, the first coil 90 generates the induced current under the action of the alternating magnetic field of the second coil 230. Since the induced current is an alternating current, the first coil 90 also generates an alternating magnetic field, namely radiating alternating magnetic field lines M1 outward. In this case, the direction of the magnetic field lines M1 generated by the first coil 90 is the same as the direction of the magnetic field lines M2 generated by the second coil 230. The direction of the magnetic field lines M1 when the first coil 90 is energized passes through the outer annular surface 102 of the annular-shaped wearing member 10.

It should be noted that, a ring has a relatively small size, which only allows a small space inside the annular-shaped wearing member 10 for placing the power supply 20, therefore the power supply 20 has a small capacity. When using the wearable device 100, a user needs to charge the power supply 20 several times a day, which causes an inconvenience to the user. The wearable device 100 according to this embodiment of the present disclosure can be charged while the electronic device 20 is being used, which overcomes this inconvenience, thereby improving the user experience of the wearable device 100.

In some other embodiments, during the process that the user's hand is wearing the wearable device 100 and holding the electronic device 200, when the outer annular surface 102 of the annular-shaped wearing member 10 partially abuts against the electronic device 200, and the first coil 90 is disposed opposite to the second coil 230, the first coil 90 of the wearable device 100 generates an alternating magnetic field under the action of the alternating current provided by the power supply 20. The second coil 230 of the electronic device 200 senses the first coil 90 of the wearable device 100, so as to couple with the first coil 90 of the wearable device 100. This realizes that the wearable device 100 provides power supply to the electronic device 200 via the first coil 90.

As shown in FIG. 8, the annular-shaped wearing member 10 includes a charging portion 13 disposed opposite to the first coil 90. The charging portion 13 is made of a non-metallic material. The first coil 90 senses the magnetic field lines via the charging portion 13. That is, the first coil 90 receives an energy emitted by an external power supply device via the charging portion 13. That is, the first coil 90 senses the alternating magnetic field of the second coil 230 via the charging portion 13, to generate the induced current. It should be understood that, the first coil 90 and the second coil 230 transfer energy therebetween by using the principle of alternating electromagnetic field induction. The charging portion 13 made of the non-metallic material effectively guarantees the energy transfer between the first coil 90 and the second coil 230, thereby realizing the charging of the power supply 20 of the wearable device 100. The non-metallic material may be plastic, polymer, and/or a material that does not affect electromagnetic induction, such as jade or any other mineral material.

In some other embodiments, the entire annular-shaped wearing member 10 may be made of the non-metallic material. That is, the entire annular-shaped wearing member 10 may be the charging portion 13. In this case, a user may wear the wearable device 100 at will. When the outer annular surface 102 of the annular-shaped wearing member 10 abuts against the electronic device 200, the first coil 90 senses the magnetic field lines via the annular-shaped wearing member 10, so as to realize charging the wearable device 100.

In this embodiment, the second housing 12 includes the charging portion 13. Specifically, the charging portion 13 is a portion of the second housing 12 of the annular-shaped wearing member 10 that is just opposite to the first coil 90. That is, a projection of the first coil 90 on the second housing 12 of the annular-shaped wearing member 10 just covers the charging portion 13, so that each position of the first coil 90 facing a surface of the charging portion 13 can sense the alternating magnetic field of the second coil 230, so as to generate the induced current. It should be understood that, a remaining portion of the second housing 12 except the charging portion 13 may be made of the non-metallic material, or be made of a metallic material. That is, the second housing 12 is at least partially made of the non-metallic material.

In some other embodiments, the charging portion 13 may not be the portion of the second housing 12 that is just opposite to the first coil 90, but rather a portion of the second housing 12 that is partially opposite to the first coil 90. Alternatively, the second housing 12 is the charging portion 13. The present disclosure does not limit the position of the charging portion 13 on the annular-shaped wearing member 10.

In addition, the outer annular surface 102 of the annular-shaped wearing member 10 is provided with a wearing identification 103, to identify a wearing position of the annular-shaped wearing member 10. In this embodiment, the wearing identification 103 is disposed opposite to a projection of the first coil 90 on the outer annular surface 102 of the annular-shaped wearing member 10. That is, the wearing identification 103 is located in a region of the outer annular surface 102 of the annular-shaped wearing member 10 away from the first coil 90. When a user is wearing the wearable device 100, the wearing identification 103 faces outward, that is, the wearing identification 103 is located on a side close to the back of the user's hand. In this case, the first coil 90 is located on a side close to the user's palm. When the user is holding the electronic device 200, the first coil 90 can be disposed just opposite to the second coil 230 of the electronic device 200, to sense the alternating magnetic field of the second coil 230, so as to generate a current, thereby realizing the charging of the power supply 20. The wearing identification 103 may be a structure used for an identification purpose provided on the outer annular surface 102 of the annular-shaped wearing member 10, such as an identification pattern (such as a five-pointed star or a loving heart), a bump, a depression, a micro-engraved line, a rough surface, or a polished surface, which can serve for identification, and at the same time, improve the beauty of the appearance of the wearable device 100, thereby being conducive to personalized design of the wearable device 100. It should be understood that, the outer annular surface 102 of the annular-shaped wearing member 10 may be provided with a decorative pattern or design, to improve the beauty of the appearance of the wearable device 100.

In some other embodiments, the projection of the first coil 90 on the outer annular surface 102 of the annular-shaped wearing member 10 may cover the wearing identification 103. In this case, the wearing identification 103 may identify a position of the first coil 90. When a user is wearing the wearable device 100, the wearing identification 103 faces inward. That is, the wearing identification 103 is located on a side close to the user's palm. This facilitates that the first coil 90 of the wearable device 100 is disposed opposite to the second coil 230 of the electronic device 200, to sense the alternating magnetic field of the second coil 230 so as to generate the current, thereby realizing the charging of the power supply 20.

## Claims

1. A wearable device (100), wherein the wearable device (100) is a smart finger ring comprising a power supply (20) in the form of an energy storage component, and various embedded functional components;
the wearable device (100) further comprises an annular-shaped wearing member (10) including a first annular shaped housing (11) and a second annular shaped housing (12) fixedly connected to each other, wherein said first housing (11) and second housing (12) are enclosed to form an accommodation cavity (110),
the wearable device (100) further comprises a circuit board (70) carrying the functional components, a first coil (90) for wireless power transfer and a magnetic isolation sheet (80), all accommodated in said cavity (110),
whereby the circuit board (70) has certain flexibility, forming a first approximately arc-shaped plate body compatible with the shape of the annular wearing member (10),
whereby the magnetic isolation sheet (80) forms a second arc-shaped plate body adapted to the shape of the annular-shaped wearing member (10),
whereby the magnetic isolation sheet (80) and the circuit board (70) are fixedly connected together to form an approximate annular plate body, adapted to the shape of the annular wearing member (10),
whereby the first coil (90) is located on an outer surface of the magnetic isolation sheet (80) and is electrically connected to the power supply (20),
whereby the power supply (20) is located on the inner side of the magnetic isolation sheet (80) and is electrically connected to the circuit board (70), the power supply (20) being in the shape of an arc plate, and adapted to the shape of the magnetic isolation sheet (80),
whereby the device comprises a wireless charging module with said first coil (90) which is configured to sense magnetic field lines passing through the laying surface of the first coil (90), to generate an induced current,
said first coil (90) having a forward charging mode during which the power supply (20) receives power, and a reverse charging mode during which the power supply (20) provides power to an external device like a phone,
wherein the functional components are mounted on the circuit board (70) and electrically connected to the circuit board (70).

2. The wearable device (100) according to claim 1, wherein the laying surface of the first coil (90) is an outer surface (801) of the magnetic isolation sheet (80), and the first coil (90) is formed by winding a wire along an edge of the outer surface (801) of the magnetic isolation sheet (80).

3. The wearable device (100) according to claim 1, wherein the wearable device (100) further comprises an auxiliary circuit board (120), the auxiliary circuit board (120) is electrically connected to the first coil (90), the magnetic isolation sheet (80) is mounted to an inner surface (120a) of the auxiliary circuit board (120), the laying surface of the first coil (90) is an outer surface (120b) of the auxiliary circuit board (120), and the first coil (90) is formed by winding a wire along an edge of the outer surface (120b) of the auxiliary circuit board (120).

4. The wearable device (100) according to claim 3, wherein a projection of the first coil (90) on the inner surface (120a) of the auxiliary circuit board (120) is at least partially located within a projection of the magnetic isolation sheet (80) on the inner surface (120a) of the auxiliary circuit board (120).

5. The wearable device (100) according to any one of claims 1 to 4, wherein the annular-shaped wearing member (10) comprises a charging portion (13), the charging portion (13) is made of a non-metallic material, and the first coil (90) is configured to sense the magnetic field lines via the charging portion (13).

6. The wearable device (100) according to any one of claims 1 to 5, wherein the outer annular surface (102) is provided with a wearing identification (103), a projection of the first coil (90) on the outer annular surface (102) covers the wearing identification (103), or, a projection of the first coil (90) on the outer annular surface (102) is disposed opposite to the wearing identification (103).

7. The wearable device (100) according to claim 1, wherein the functional component is mounted to an inner surface of the circuit board.

8. A wearable system (1000), comprising a wearable device (100) according to any one of claims 1 to 7 and an electronic device (200); wherein the electronic device (200) comprises a second coil (230); and in a case that the outer annular surface (102) partially abuts against the electronic device (200), the first coil (90) and the second coil (230) are disposed opposite to each other, and the first coil (90) and the second coil (230) that are in an energized state generate magnetic field lines in a same direction.

9. The wearable system (1000) according to claim 8, wherein the electronic device (200) comprises a rear cover (212), the second coil (230) is mounted to an inner side of the rear cover (212), and a normal to a laying surface of the second coil (230) through a winding center (C'-C') of the second coil (230) is perpendicular to the rear cover (212).

10. The wearable system (1000) according to claim 9, wherein in a case that the outer annular surface (102) partially abuts against the electronic device (200), the first coil (90) and the second coil (230) are disposed opposite to each other, and the normal through the winding center (C-C) of the first coil (90) is parallel or coincident with the normal through the winding center (C'-C') of the second coil (230).

11. The wearable system (1000) according any one of claims 8 to 9, wherein the electronic device (200) is a smartphone; a tablet computer; a personal digital assistant, PDA; a mobile internet device, MID; or a smart wearable device.

## Patentansprüche

1. Ein tragbares Gerät (100), wobei das tragbare Gerät (100) ein intelligenter Fingerring ist, der eine Stromversorgung (20) in Form einer Energiespeicherkomponente sowie verschiedene eingebettete Funktionskomponenten umfasst;
das tragbare Gerät (100) umfasst ferner ein ringförmiges Trageelement (10), das ein erstes ringförmiges Gehäuse (11) und ein zweites ringförmiges Gehäuse (12) umfasst, die fest miteinander verbunden sind, wobei das erste Gehäuse (11) und das zweite Gehäuse (12) zusammen einen Aufnahmeraum (110) bilden,
das tragbare Gerät (100) umfasst ferner eine Leiterplatte (70), die die Funktionskomponenten trägt, eine erste Spule (90) zur drahtlosen Energieübertragung und eine magnetische Isolationsfolie (80), die sich alle in dem Aufnahmeraum (110) befinden,
wobei die Leiterplatte (70) eine gewisse Flexibilität aufweist und einen ersten annähernd bogenförmigen Plattenkörper bildet, der mit der Form des ringförmigen Trageelements (10) kompatibel ist,
wobei die magnetische Isolationsfolie (80) einen zweiten bogenförmigen Plattenkörper bildet, der an die Form des ringförmigen Trageelements (10) angepasst ist,
wobei die magnetische Isolationsfolie (80) und die Leiterplatte (70) fest miteinander verbunden sind, um einen annähernd ringförmigen Plattenkörper zu bilden, der an die Form des ringförmigen Trageelements (10) angepasst ist,
wobei sich die erste Spule (90) auf einer Außenseite der magnetischen Isolationsfolie (80) befindet und elektrisch mit der Stromversorgung (20) verbunden ist,
wobei sich die Stromversorgung (20) auf der Innenseite der magnetischen Isolationsfolie (80) befindet und elektrisch mit der Leiterplatte (70) verbunden ist, wobei die Stromversorgung (20) die Form einer Bogenplatte hat und an die Form der magnetischen Isolationsfolie (80) angepasst ist,
wobei das Gerät ein drahtloses Lademodul mit der genannten ersten Spule (90) umfasst, das so konfiguriert ist, dass es Magnetfeldlinien erfasst, die die Liegefläche der ersten Spule (90) durchqueren, um einen Induktionsstrom zu erzeugen,
wobei die erste Spule (90) einen Vorwärts-Lademodus aufweist, in dem die Stromversorgung (20) mit Energie versorgt wird, und einen Rückwärts-Lademodus, in dem die Stromversorgung (20) Energie an ein externes Gerät wie ein Telefon abgibt,
wobei die Funktionskomponenten auf der Leiterplatte (70) montiert und elektrisch mit der Leiterplatte (70) verbunden sind.

2. Das tragbare Gerät (100) gemäß Anspruch 1 ist **dadurch gekennzeichnet, dass** die Liegefläche der ersten Spule (90) eine Außenfläche (801) der magnetischen Isolationsfolie (80) ist und die erste Spule (90) durch Wickeln eines Drahtes entlang einer Kante der Außenfläche (801) der magnetischen Isolationsfolie (80) gebildet ist.

3. Die tragbare Vorrichtung (100) gemäß Anspruch 1, wobei die tragbare Vorrichtung (100) weiterhin eine Hilfsleiterplatte (120) umfasst, die Hilfsleiterplatte (120) elektrisch mit der ersten Spule (90) verbunden ist, das magnetische Abschirmblech (80) auf einer Innenfläche (120a) der Hilfsleiterplatte (120) montiert ist, die Verlegefläche der ersten Spule (90) eine Außenfläche (120b) der Hilfsleiterplatte (120) ist, und die erste Spule (90) durch das Aufwickeln eines Drahtes entlang einer Kante der Außenfläche (120b) der Hilfsleiterplatte (120) gebildet wird.

4. Die tragbare Vorrichtung (100) gemäß Anspruch 3, wobei eine Projektion der ersten Spule (90) auf die Innenfläche (120a) der Hilfsleiterplatte (120) zumindest teilweise innerhalb einer Projektion des magnetischen Abschirmblechs (80) auf der Innenfläche (120a) der Hilfsleiterplatte (120) liegt.

5. Die tragbare Vorrichtung (100) gemäß einem der Ansprüche 1 bis 4, wobei das ringförmige Trageelement (10) einen Ladeabschnitt (13) umfasst, der Ladeabschnitt (13) aus einem nichtmetallischen Material besteht und die erste Spule (90) so konfiguriert ist, dass sie die Magnetfeldlinien über den Ladeabschnitt (13) erfasst.

6. Die tragbare Vorrichtung (100) gemäß einem der Ansprüche 1 bis 5, wobei die äußere ringförmige Oberfläche (102) mit einer Tragekennzeichnung (103) versehen ist, wobei eine Projektion der ersten Spule (90) auf der äußeren ringförmigen Oberfläche (102) die Tragekennzeichnung (103) abdeckt oder eine Projektion der ersten Spule (90) auf der äußeren ringförmigen Oberfläche (102) der Tragekennzeichnung (103) gegenüberliegt.

7. Die tragbare Vorrichtung (100) gemäß Anspruch 1, wobei die Funktionskomponente an einer Innenfläche der Leiterplatte angebracht ist.

8. Ein tragbares System (1000), umfassend eine tragbare Vorrichtung (100) gemäß einem der Ansprüche 1 bis 7 und ein elektronisches Gerät (200); wobei das elektronische Gerät (200) eine zweite Spule (230) umfasst; und für den Fall, dass die äußere ringförmige Oberfläche (102) teilweise an das elektronische Gerät (200) anliegt, die erste Spule (90) und die zweite Spule (230) einander gegenüberliegend angeordnet sind und sich in einem erregten Zustand befindende erste Spule (90) und zweite Spule (230) Magnetfeldlinien in dieselbe Richtung erzeugen.

9. Das tragbare System (1000) gemäß Anspruch 8, wobei das elektronische Gerät (200) eine Rückabdeckung (212) umfasst, die zweite Spule (230) an der Innenseite der Rückabdeckung (212) angebracht ist und eine Normale auf der Verlegefläche der zweiten Spule (230) durch ein Wickelzentrum (C'-C') der zweiten Spule (230) senkrecht zur Rückabdeckung (212) verläuft.

10. Das tragbare System (1000) gemäß Anspruch 9, wobei im Falle, dass die äußere Ringfläche (102) teilweise an das elektronische Gerät (200) anstößt, die erste Spule (90) und die zweite Spule (230) einander gegenüberliegen und die Normale durch das Wicklungszentrum (C-C) der ersten Spule (90) parallel oder deckungsgleich mit der Normalen durch das Wicklungszentrum (C'-C') der zweiten Spule (230) ist.

11. Das tragbare System (1000) gemäß einem der Ansprüche 8 bis 9, wobei das elektronische Gerät (200) ein Smartphone, ein Tablet-Computer, ein persönlicher digitaler Assistent (PDA), ein mobiles Internetgerät (MID) oder ein intelligentes tragbares Gerät ist.

## Revendications

1. Un dispositif portable (100), ledit dispositif portable (100) étant une bague intelligente comprenant une alimentation électrique (20) sous la forme d'un composant de stockage d'énergie, ainsi que divers composants fonctionnels intégrés ;
le dispositif portable (100) comprend en outre un élément de port annulaire (10) comprenant un premier boîtier de forme annulaire (11) et un second boîtier de forme annulaire (12) fixés l'un à l'autre, ledit premier boîtier (11) et ledit second boîtier (12) étant assemblés pour former une cavité de réception (110),
le dispositif portable (100) comprend en outre une carte de circuit imprimé (70) supportant les composants fonctionnels, une première bobine (90) pour le transfert d'énergie sans fil et une feuille d'isolation magnétique (80), tous étant logés dans ladite cavité (110),
la carte de circuit imprimé (70) présente une certaine flexibilité, formant un premier corps de plaque en arc approximatif compatible avec la forme de l'élément de port annulaire (10),
la feuille d'isolation magnétique (80) forme un second corps de plaque en arc adapté à la forme de l'élément de port annulaire (10),
la feuille d'isolation magnétique (80) et la carte de circuit imprimé (70) sont fixées ensemble de manière à former un corps de plaque annulaire approximatif, adapté à la forme de l'élément de port annulaire (10),
la première bobine (90) est située sur une surface extérieure de la feuille d'isolation magnétique (80) et est connectée électriquement à l'alimentation (20),
l'alimentation (20) est située à l'intérieur de la feuille d'isolation magnétique (80) et est connectée électriquement à la carte de circuit imprimé (70), l'alimentation (20) étant en forme de plaque arquée et adaptée à la forme de la feuille d'isolation magnétique (80),
le dispositif comprend un module de charge sans fil avec ladite première bobine (90) qui est configurée pour détecter les lignes de champ magnétique traversant la surface de pose de la première bobine (90), afin de générer un courant induit,
ladite première bobine (90) présentant un mode de charge direct durant lequel l'alimentation (20) reçoit de l'énergie, et un mode de charge inverse durant lequel l'alimentation (20) fournit de l'énergie à un appareil externe tel qu'un téléphone,
les composants fonctionnels étant montés sur la carte de circuit imprimé (70) et électriquement connectés à celle-ci.

2. Le dispositif portable (100) selon la revendication 1, dans lequel la surface de pose de la première bobine (90) est une surface extérieure (801) de la feuille d'isolation magnétique (80), et la première bobine (90) est formée en enroulant un fil le long d'un bord de la surface extérieure (801) de la feuille d'isolation magnétique (80).

3. Le dispositif portable (100) selon la revendication 1, dans lequel le dispositif portable (100) comprend en outre une carte de circuit auxiliaire (120), la carte de circuit auxiliaire (120) est électriquement connectée à la première bobine (90), la feuille d'isolation magnétique (80) est montée sur une surface intérieure (120a) de la carte de circuit auxiliaire (120), la surface de pose de la première bobine (90) est une surface extérieure (120b) de la carte de circuit auxiliaire (120), et la première bobine (90) est formée en enroulant un fil le long d'un bord de la surface extérieure (120b) de la carte de circuit auxiliaire (120).

4. Le dispositif portable (100) selon la revendication 3, dans lequel une projection de la première bobine (90) sur la surface intérieure (120a) de la carte de circuit auxiliaire (120) est au moins partiellement située à l'intérieur d'une projection de la feuille d'isolation magnétique (80) sur la surface intérieure (120a) de la carte de circuit auxiliaire (120).

5. Le dispositif portable (100) selon l'une quelconque des revendications 1 à 4, dans lequel l'élément de port annulaire (10) comprend une partie de charge (13), la partie de charge (13) est faite d'un matériau non métallique, et la première bobine (90) est configurée pour détecter les lignes de champ magnétique via la partie de charge (13).

6. Le dispositif portable (100) selon l'une quelconque des revendications 1 à 5, dans lequel la surface annulaire extérieure (102) est pourvue d'une identification de port (103), une projection de la première bobine (90) sur la surface annulaire extérieure (102) recouvre l'identification de port (103) ou, une projection de la première bobine (90) sur la surface annulaire extérieure (102) est placée en face de l'identification de port (103).

7. Le dispositif portable (100) selon la revendication 1, dans lequel le composant fonctionnel est monté sur une surface intérieure de la carte de circuit.

8. Un système portable (1000), comprenant un dispositif portable (100) selon l'une quelconque des revendications 1 à 7 et un dispositif électronique (200) ; dans lequel le dispositif électronique (200) comprend une seconde bobine (230) ; et dans le cas où la surface annulaire extérieure (102) vient partiellement en contact avec le dispositif électronique (200), la première bobine (90) et la seconde bobine (230) sont disposées face à face, et la première bobine (90) et la seconde bobine (230) lorsqu'elles sont alimentées génèrent des lignes de champ magnétique dans une même direction.

9. Le système portable (1000) selon la revendication 8, dans lequel le dispositif électronique (200) comprend un couvercle arrière (212), la seconde bobine (230) est montée sur un côté intérieur du couvercle arrière (212), et une normale à la surface de pose de la seconde bobine (230) passant par le centre d'enroulement (C'-C') de la seconde bobine (230) est perpendiculaire au couvercle arrière (212).

10. Le système portable (1000) selon la revendication 9, dans le cas où la surface annulaire extérieure (102) s'appuie partiellement contre le dispositif électronique (200), la première bobine (90) et la deuxième bobine (230) sont disposées face à face, et la normale passant par le centre d'enroulement (C-C) de la première bobine (90) est parallèle ou coïncide avec la normale passant par le centre d'enroulement (C'-C') de la deuxième bobine (230).

11. Le système portable (1000) selon l'une quelconque des revendications 8 à 9, dans lequel le dispositif électronique (200) est un smartphone ; une tablette ; un assistant personnel numérique, PDA ; un appareil internet mobile, MID ; ou un dispositif portable intelligent.
